# EUROPEAN PATENT APPLICATION

(11) **EP 3 845 871 A1**
(43) Date of publication of application: **07.07.2021**
(21) Application number: 20215885.3
(22) Date of filing: 21.12.2020
(51) Int. Cl.: G01F 25/00, G01P 21/00, F01N 11/00, G01F 23/296

(54) **FAILURE DETECTOR AND FAILURE DETECTION METHOD**

(30) Priority: 06.01.2020 JP 2020000166
(71) Applicant: Kabushiki Kaisha Toyota Jidoshokki, Kariya-shi, Aichi 448-8671 (JP)
(72) Inventor: UOZUMI, Akifumi, Kariya-shi, Aichi 448-8671 (JP); TOYOTA, Tadashi, Kariya-shi, Aichi 448-8671 (JP); MURATA, Dai, Kariya-shi, Aichi 448-8671 (JP)
(74) Representative: TBK

(57) **Abstract**

A failure detector includes a reducing agent tank (65) in which reducing agent solution (67) is stored, a liquid level sensor configured to detect a liquid level of the reducing agent solution (67), a behavior variation detector configured to detect behavior variations of a vehicle, and a controller (50) configured to perform control for causing the behavior variation detector to detect the behavior variations of the vehicle for a first specified time and the liquid level sensor to detect variations in the liquid level of the reducing agent solution (67) for a second specified time. The controller (50) has a failure detection unit that detects a presence of a failure of each of the behavior variation detector and the liquid level sensor based on the behavior variations and the variations in the liquid level of the reducing agent solution (67).

## Description

### BACKGROUND ART

The present disclosure relates to a failure detector that detects a presence of a failure of a liquid level sensor for detecting a liquid level of reducing agent solution and a failure detection method performed by the failure detector.

Conventionally, a variety of techniques that detects a failure of an acceleration sensor mounted on a vehicle has been proposed. For example, Japanese Patent Application Publication No. 2017-67586 discloses a failure diagnostic device including a controller. The controller determines whether or not a difference between first acceleration of a vehicle (measured value of the acceleration) that is detected by an acceleration sensor and second acceleration of the vehicle (estimated value of the acceleration) that is calculated from a vehicle speed detected by a vehicle speed sensor is larger than a threshold value A.

In response to determining that the difference between the first acceleration and the second acceleration is larger than the threshold value A, the controller counts, for a time determined in advance, the number of times in which a level of a signal input from a level sensor that is disposed in a urea water solution tank and detects a liquid level of urea water solution is shifted to a different level. The controller diagnoses a condition of the acceleration sensor as a normal condition in response to the number of times in which the level of the signal input from the level sensor is shifted to the different level and which is smaller than or equal to the number of times B determined in advance for the time determined in advance. Whereas, the controller is configured to diagnose the condition of the acceleration sensor as a failure condition in response to the number of times in which the level of the signal input from the level sensor is shifted to the different level and which is larger than the number of times B determined in advance for the time determined in advance.

With this configuration, while the vehicle is traveling up a slope, the difference between the first acceleration and the second acceleration is larger than the threshold value A, frequency of a variation of a liquid surface of the urea water solution in the urea water solution tank is lower. As a result, the controller suppresses a diagnosis of the condition of the acceleration sensor as a failure condition in response to the number of times in which the level of the signal input from the level sensor is shifted to the different level and which is smaller than the number of times B determined in advance for the time determined in advance, so that a wrong diagnosis is prevented.

However, although the failure diagnostic device described in the Publication determines a presence of a failure of the acceleration sensor in accordance with the signal input from the level sensor, the failure diagnostic device, when the acceleration sensor is in a normal condition, does not determine a presence of a failure of the level sensor in accordance with the signal input from the acceleration sensor.

The present disclosure has been made in view of the above circumstances, and is directed to providing a failure detector that detects a presence of a failure of a liquid level sensor.

### SUMMARY

In accordance with an aspect of the present disclosure, there is provided a failure detector that includes a reducing agent tank in which reducing agent solution of specified concentration is stored, a liquid level sensor configured to detect a liquid level of the reducing agent solution stored in the reducing agent tank, a behavior variation detector configured to detect behavior variations of a vehicle, and a controller configured to perform control for causing the behavior variation detector to detect the behavior variations of the vehicle for a first specified time and the liquid level sensor to detect variations in the liquid level of the reducing agent solution for a second specified time. The controller has a failure detection unit that detects a presence of a failure of each of the behavior variation detector and the liquid level sensor based on the behavior variations of the vehicle detected by the behavior variation detector and the variations in the liquid level of the reducing agent solution detected by the liquid level sensor.

In accordance with an aspect of the present disclosure, there is provided a failure detection method performed by a failure detector that includes a reducing agent tank in which reducing agent solution of specified concentration is stored, a liquid level sensor configured to detect a liquid level of the reducing agent solution stored in the reducing agent tank, a behavior variation detector configured to detect behavior variations of a vehicle, and a controller. The failure detection method includes detecting the behavior variations of the vehicle for a first specified time by the behavior variation detector, detecting variations in the liquid level of the reducing agent solution for a second specified time by the liquid level sensor, and detecting a presence of a failure of each of the behavior variation detector and the liquid level sensor based on the detected behavior variations of the vehicle and the detected variations in the liquid level of the reducing agent solution, wherein the detecting of the behavior variations, the variations in the liquid level of the reducing agent solution, and the presence of the failure is performed by the controller.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is an explanatory view of a configuration example of an internal combustion engine according to an embodiment of the present disclosure,
FIG. 2 is an explanatory view of a configuration of an ultrasonic water level detector of FIG. 1,
FIG. 3 is a main flowchart of a first sensor failure detection process in which a controller detects a presence of a stuck failure of each of an acceleration sensor and an ultrasonic liquid level sensor,
FIG. 4 is a sub-flowchart showing a sub-process of a sensor diagnosis process of FIG. 3,
FIG. 5 is a view showing an example of an output of each of an acceleration sensor and the ultrasonic liquid level sensor, and
FIG. 6 is a main flowchart of a second sensor failure detection process in which a controller according to another first embodiment detects a presence of a stuck failure of each of the acceleration sensor and the ultrasonic liquid level sensor.

### DETAILED DESCRIPTION OF THE EMBODIMENTS

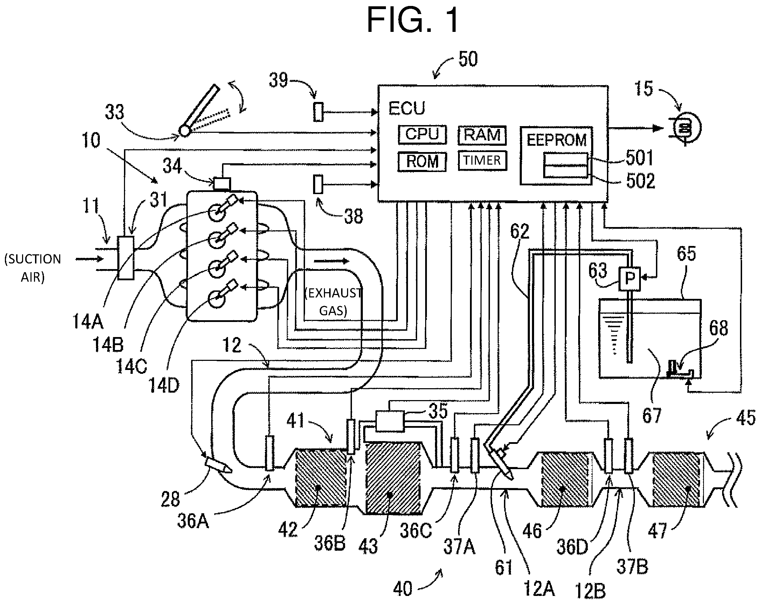

The following will describe an embodiment of a failure detector according to the present disclosure in detail with reference to the drawings. FIG. 1 illustrates a configuration of an internal combustion engine 10 according to the present embodiment. The internal combustion engine 10 is a diesel engine. Here, while the internal combustion engine 10 generally has high efficiency and high durability, the internal combustion engine 10 discharges harmful substances such as particulate matters (PMs), nitrogen oxides (NOx), carbon monoxide (CO), and hydrocarbon (HC) with exhaust gas.

As illustrated in FIG. 1, an exhaust gas purification device 40 is provided in a discharge passage (discharge gas passage) 12 of the internal combustion engine 10. The exhaust gas purification device 40 includes an upstream exhaust gas purification device 41 and a downstream exhaust gas purification device 45 that is disposed on a downstream side of the upstream exhaust gas purification device 41. The upstream exhaust gas purification device 41 includes a first oxidation catalyst (DOC: Diesel Oxidation Catalyst) 42 and a particulate matter removing filter (DPF: Diesel Particulate Filter) 43. The particulate matter removing filter 43 are located on a downstream side of the first oxidation catalyst 42.

The first oxidation catalyst 42 has a cellular cylindrical body formed from a ceramic columnar body, etc. The first oxidation catalyst 42 has in an axial direction thereof a plurality of holes whose inner surfaces are coated with a noble metal such as platinum (Pt). Exhaust gas flows through the plurality of holes of the first oxidation catalyst 42 at a specified temperature, so that the first oxidation catalyst 42 oxidizes and removes carbon monoxide and hydrocarbon contained in the exhaust gas.

The particulate matter removing filter 43 (hereinafter, called DPF) has a cellular cylindrical body formed from a columnar body. The columnar body is formed from a porous member made of ceramic material, etc. The cellular cylindrical body of the DPF 43 has a honeycomb structure in which a plurality of small holes are formed in an axial direction of the DPF 43. A first end of a first small hole of two adjacent small holes is sealed by a seal member and a first end of a second small hole is open, while a second end of the first small hole of two adjacent small holes is open and a second end of the second small hole is sealed by the seal member. The exhaust gas flows into each small hole of the porous material from an upstream side of the DPF 43, so that the DPF 43 captures particulate matters (PMs) and discharges only the exhaust gas toward a downstream side of the DPF 43 through the adjacent small hole.

A fuel additive valve 28 and an exhaust gas temperature detector 36A (e.g. exhaust gas temperature sensor) are provided on an upstream side of the first oxidation catalyst 42 (in an upstream portion of the upstream exhaust gas purification device 41). The fuel additive valve 28, when the DPF 43 in which particulate matters are accumulated is regenerated (when particulate matters are combusted and incinerated), injects fuel that reacts with the exhaust gas in the first oxidation catalyst 42 to increase temperature of the exhaust gas. In addition, an exhaust gas temperature detector 36B (e.g. exhaust gas temperature sensor) is provided on the downstream side of the first oxidation catalyst 42 and on the upstream side of the DPF 43.

An exhaust gas temperature detector 36C (e.g. exhaust gas temperature sensor) is provided on the downstream side of the DPF 43. A differential pressure sensor 35 is provided in the upstream exhaust gas purification device 41, and detects differential pressure (difference of pressure) between exhaust pressure corresponding to pressure in an exhaust pipe on the downstream side of the first oxidation catalyst 42 and on the upstream side of the DPF 43 and pressure in an exhaust pipe on the downstream side of the DPF 43.

The downstream exhaust gas purification device 45 that is disposed on the downstream side of the upstream exhaust gas purification device 41 includes a urea water solution additive valve (reducing agent additive valve) 61, a selective catalytic reduction (SCR) 46, and a second oxidation catalyst 47 that are arranged in this order. The urea water solution additive valve 61 is located on an upstream side of the selective catalytic reduction 46. The selective catalytic reduction (hereinafter, called SCR) 46 is coupled to a downstream portion of the DPF 43 through an exhaust pipe 12A. The urea water solution additive valve 61 is disposed on the downstream side of the DPF 43 and on an upstream side of the SCR 46 in the exhaust pipe 12A, and adds (sprays) urea water solution as reducing agent solution on the exhaust gas toward the SCR 46 at specified intervals (e.g. from 200 msec to 400 msec). An NOx sensor 37A is provided on an upstream side of the urea water solution additive valve 61 in the exhaust pipe 12A.

The second oxidation catalyst 47 is coupled to the SCR 46 on a downstream side thereof via an exhaust pipe 12B. An exhaust gas temperature detector (catalyst temperature detector) 36D (e.g. exhaust gas temperature sensor)is provided on the downstream side of the SCR 46 in the exhaust pipe 12B. An NOx sensor 37B is also provided on a downstream side of the exhaust gas temperature detector 36D in the exhaust pipe 12B. Each of the NOx sensors 37A, 37B detects a detection signal corresponding to NOx concentration in the exhaust gas.

The urea water solution additive valve 61 is coupled to a urea water solution tank (reducing agent tank) 65 via a supply pipe 62 and a urea water solution pump 63. Urea water solution 67 of a specified concentration is stored in the urea water solution tank 65. The urea water solution pump 63 is an electric pump that is rotatably driven by a drive signal from a controller (ECU) 50, and rotatable in both standard and reverse directions. The urea water solution (reducing agent solution) 67 is pumped from the urea water solution tank 65 by rotation of the urea water solution pump 63 in the standard direction, and supplied to the urea water solution additive valve 61 through the supply pipe 62. On the other hand, the urea water solution 67 is pumped from the supply pipe 62 by rotation of the urea water solution pump 63 in the reverse direction, and flows into the urea water solution tank 65. It is noted that a water-pressure sensor that detects pressure of the urea water solution 67 may be provided in the supply pipe 62.

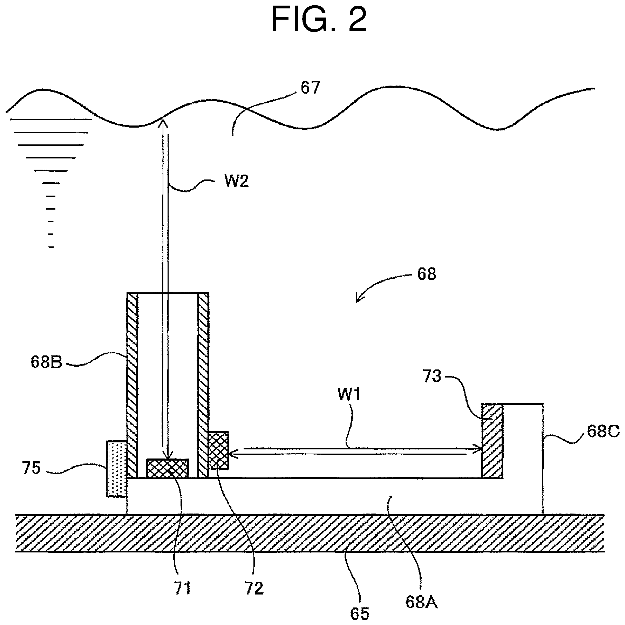

An ultrasonic liquid level detector 68 that detects a remaining amount of the urea water solution 67 stored in the urea water solution tank 65 is provided in the urea water solution tank 65. As illustrated in FIG. 2, the ultrasonic liquid level detector 68 has a base portion 68A, a tubular portion 68B, and a wall portion 68C. The base portion has a plate-like shape, and is disposed horizontally in a bottom portion of the urea water solution tank 65. The tubular portion 68B has a rectangular tube shape, and protrudes vertically upward from a first edge portion (edge portion on the left side in FIG. 2) of the base portion 68A. The wall portion 68C extends vertically upward from a second edge portion (edge portion on the right side in FIG. 2) that is opposite side of the base portion 68A relative to the first edge portion. A height of the wall portion 68C is lower than a height of the tubular portion 68B. A side face (side face on the right side in FIG. 2) of the tubular portion 68B faces the wall portion 68C.

An ultrasonic liquid level sensor (liquid level sensor) 71 is disposed in a bottom portion of the tubular portion 68B and used to detect a liquid level of the urea water solution 67. An ultrasonic concentration sensor 72 is disposed in a base end portion of the outer side face of the tubular portion 68B that faces the wall portion 68C, and used to detect concentration of the urea water solution 67. An ultrasonic reflection plate 73 is attached to a wall surface (wall surface on the left side in FIG. 2) of the wall portion 68C in such a manner that one surface of the ultrasonic reflection plate 73 faces the ultrasonic concentration sensor 72.

The ultrasonic reflection plate 73 reflects ultrasonic wave transmitted from the ultrasonic concentration sensor 72 to the ultrasonic concentration sensor 72. Accordingly, the protruding height of the tubular portion 68B from the base portion 68A is set in such a manner that the ultrasonic wave reflected from the ultrasonic reflection plate 73 does not enter into the tubular portion 68B. An urea water solution temperature sensor (temperature sensor) 75 is attached to a base end portion of an outer side surface (side surface on the left side in FIG. 2) of the tubular portion 68B that is opposite side of the tubular portion 68B relative to the ultrasonic concentration sensor 72, and used to detect temperature of the urea water solution 67.

The urea water solution temperature sensor 75 outputs a detection signal corresponding to the temperature of the urea water solution 67 in the urea water solution tank 65 to the controller (ECU: Electronic Control Unit) 50. The ultrasonic concentration sensor 72 transmits ultrasonic wave W1 in response to a transmission signal from the controller 50, and outputs a reception signal to the controller 50 in response to receiving the ultrasonic wave W1 reflected from the ultrasonic reflection plate 73. By using the reflection signal, the controller 50 calculates a speed of sound from a round-trip distance between the ultrasonic concentration sensor 72 and the ultrasonic reflection plate 73 and a time between transmission of the ultrasonic wave W1 and reception of the ultrasonic wave W1, and stores the speed of sound in a RAM.

Then, the controller 50 refers to a concentration map (not shown) in which a correlation between a speed of sound and concentration of the urea water solution is stored in advance to obtain concentration of the urea water solution 67 corresponding to the calculated speed of sound. Furthermore, the controller 50 corrects the concentration in accordance with the temperature of the urea water solution 67 detected by the urea water solution temperature sensor 75, thereby finally determining the concentration. It is noted that a ROM stores a correlation map (not shown) in which concentration of urea water solution and a speed of sound in the urea water solution that is obtained by a test in advance are correlated with each other.

In addition, the ultrasonic liquid level sensor 71 transmits ultrasonic wave W2 in response to a transmission signal from the controller 50, and outputs a reception signal to the controller 50 in response to receiving the ultrasonic wave W2 reflected from a liquid surface of the urea water solution 67. By using the reflection signal, the controller 50 calculates a liquid level of the urea water solution 67, that is, a urea water level from a time between transmission of the ultrasonic wave W2 and reception of the ultrasonic wave W2 and the speed of sound detected by the ultrasonic concentration sensor 72.

The SCR 46 is a catalyst that detoxifies nitrogen oxides (NOx) by using the urea water solution (reducing agent solution) added by the urea water solution additive valve 61. Specifically, the urea water solution added (sprayed) from the urea water solution additive valve 61 is hydrolyzed by exhaust heat of the exhaust gas. In this time, ammonia (NH₃) is generated by a reaction shown in the following Equation 1.

(NH₂)₂CO + H₂O → 2NH₃ + CO₂ ··· (1)

While the exhaust gas flows through the SCR 46, the nitrogen oxides (NOx) in the exhaust gas is selectively reduced and purified by the ammonia absorbed in the SCR 46. In this time, a reduction reaction shown in the following Equations 2 to 4 is performed, so that NOx is reduced and purified.

4NO + 4NH₃ + O₂ → 4N₂+6H₂O ··· (2)

6NO₂ + 8NH₃ → 7N₂ + 12H₂O ··· (3)

NO + NO₂ + 2NH₃ → 2N₂ + 3H₂O ··· (4)

When NOx is reduced and purified by the ammonia shown in the above Equations 2 to 4, the surplus ammonia that has been left over at an end of the reduction and purification since all ammonia has not been used for the reaction with the NOx flows into a second oxidation catalyst 47 through the exhaust pipe 12B on the downstream side of the SCR 46. In this case, the second oxidation catalyst 47 oxidizes and removes the surplus ammonia flown into the second oxidation catalyst 47.

The fuel additive valve 28, the urea water solution additive valve 61, and the urea water solution pump 63 are driven by control signals from the controller (ECU) 50. The controller 50 is a generally known controller that includes a CPU, a RAM, a ROM, a timer, an EEPROM, etc. The CPU performs a variety of calculation processes in accordance with various programs and a map that are stored in the ROM. The RAM temporarily stores a calculation result by the CPU, data input from each detector, etc. The EEPROM stores, for example, data which need to be preserved when the internal combustion engine 10 stops.

The EEPROM has, as described later, an integrated acceleration variation value storage 501 that stores an integrated acceleration variation value. The integrated acceleration variation value is obtained by integrating absolute values (acceleration variations) of differences between present acceleration and the previous acceleration that are detected by an acceleration sensor 38 (behavior variation detector) mounted on a vehicle. In addition, the EEPROM has an integrated urea water level variation value storage 502 that stores an integrated urea water level variation value. The integrated urea water level variation value is obtained by integrating absolute values (urea water level variations) of differences between a present urea water level and the previous urea water level that are detected by the ultrasonic liquid level sensor 71, as described later. The behavior variation detector herein refers to a detector that detects behavior variations of the vehicle. The behavior variations herein refer to a behavior that causes variations in a liquid level of the reducing agent solution stored in the reducing agent tank.

The exhaust gas temperature detector 36A outputs, to the controller 50, a detection signal corresponding to a temperature of the exhaust gas in the exhaust pipe on the upstream side of the first oxidation catalyst 42 to the controller 50. The exhaust gas temperature detector 36B outputs, to the controller 50, a detection signal corresponding to a temperature of the exhaust gas flown on the downstream side of the first oxidation catalyst 42 and on the upstream side of the DPF 43. The exhaust gas temperature detector 36C outputs, to the controller 50, a detection signal corresponding to a temperature of the exhaust gas flown on the downstream side of the DPF 43 and on the upstream side of the SCR 46. The exhaust gas temperature detector 36D outputs, to the controller 50, a detection signal corresponding to a temperature of the exhaust gas flown on the downstream side of the SCR 46 and on the upstream side of the second oxidation catalyst 47.

The differential pressure sensor 35 outputs, to the controller 50, a detection signal corresponding to a differential pressure between exhaust pressure corresponding to pressure in the exhaust pipe on the downstream side of the first oxidation catalyst 42 and on the upstream side of the DPF 43 and the pressure in the exhaust pipe on the downstream side of the DPF 43. The NOx sensor 37A outputs, to the controller 50, a detection signal corresponding to NOx concentration of the exhaust gas on the upstream side of the urea water solution additive valve 61. The NOx sensor 37B outputs, to the controller 50, a detection signal corresponding to NOx concentration of the exhaust gas on the downstream side of the SCR 46 and on the upstream side of the second oxidation catalyst 47.

Each detection signal of a suction air flow detector 31 (e.g. air flow meter) provided in a suction passage 11, an accelerator opening detector 33, a rotational detector 34, the acceleration sensor 38 and a vehicle speed sensor 39 is input into the controller 50. In addition, each detection signal of the exhaust gas temperature detectors 36A, 36B, 36C, 36D, the differential pressure sensor 35, the NOx sensors 37A, 37B, the ultrasonic liquid level sensor 71, the ultrasonic concentration sensor 72, and the urea water solution temperature sensor 75, which are described above, is input into the controller 50.

The controller 50 detects an operation state of the internal combustion engine 10 based on these detection signals input into the controller 50. The controller 50 outputs control signals for controlling an amount of fuel that is injected into a cylinder of the internal combustion engine 10 from each of the injectors 14A to 14D and an amount of the fuel that is injected from the fuel additive valve 28 in accordance with the detected operation state of the internal combustion engine 10 and a demand from a driver based on the detection signal from the accelerator opening detector 33.

The controller 50 calculates a fuel consumption amount per second (g/s) injected from each of the injectors 14A to 14D at specified intervals (e.g. about 10 msec to 100 msec), and stores the fuel consumption amount per second to the RAM in time series. In addition, the controller 50 calculates differential pressure (difference of pressure) by a detection signal input from the differential pressure sensor 35 at specified intervals (e.g. 10 msec to 100 msec), and stores the differential pressure to the RAM in time series.

The fuel injected to the exhaust gas from the fuel additive valve 28 reacts with oxygen remained in the exhaust gas by the first oxidation catalyst 42 and is combusted. An exhaust gas temperature is increased by heat generated by the combustion. The exhaust gas of the high temperature increases a bed temperature of the DPF 43. The particulate matters accumulated in the DPF 43 are combusted and incinerated in response to the bed temperature of the DPF 43 that reaches a specified temperature or higher (e.g. 590°C or higher). The particulate matters (PMs) accumulated in the DPF 43 are combusted and removed by keeping such a state in a specified time. This means that a capture function of the DPF 43 for capturing the particulate matters in the exhaust gas is restored (regenerated).

The suction air flow detector 31 (e.g. intake air flow rate sensor) is provided in the suction passage 11 of the internal combustion engine 10, and outputs, to the controller 50, a detection signal corresponding to a flow rate of air sucked by the internal combustion engine 10. The accelerator opening detector 33 (e.g. accelerator opening sensor) outputs, to the controller 50, a detection signal corresponding to an opening of an accelerator (i.e. load required by the driver) that is operated by the driver.

The rotational detector 34 (e.g. rotational detection sensor) outputs, to the controller 50, a detection signal corresponding to, for example, the number of rotation of a crank shaft of the internal combustion engine 10 (i.e. engine speed). The acceleration sensor 38 outputs a detection signal corresponding to acceleration of the vehicle to the controller 50. The vehicle speed sensor 39 (behavior variation detector) is provided in wheels of the vehicle, a drive shaft that is integrally rotated with the wheels, etc., and outputs a detection signal corresponding to a vehicle speed to the controller 50.

In an example illustrated in FIG. 1, the controller 50, as described later, turns on and off an alert lamp 15. The alert lamp 15 is turned on in response to detection of a stuck failure in which an output of the acceleration sensor 38 or an output of the ultrasonic liquid level sensor 71 of the ultrasonic liquid level detector 68 is stuck. The alert lamp 15 is provided in, for example, an instrument panel of the vehicle.

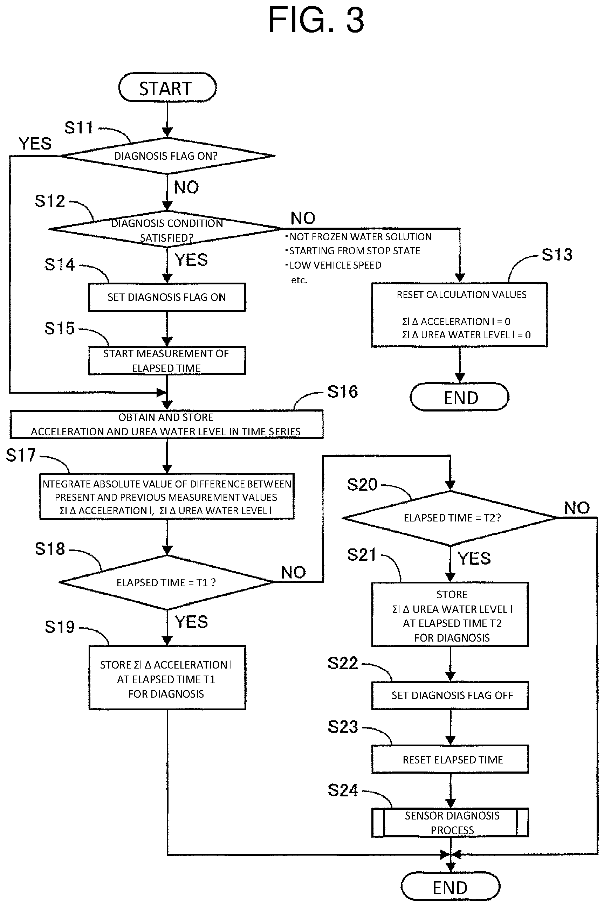

The following will, in the internal combustion engine 10 that is configured as described above, describe an example of a first sensorfailure detection process in which a presence of a stuck failure of each of the acceleration sensor 38 and the ultrasonic liquid level sensor 71 of the ultrasonic liquid level detector 68 is detected by the controller 50 with reference to FIGS. 3 to 5. It is noted that while the internal combustion engine 10 is operated, the controller 50 repeatedly executes the process shown in a flowchart of FIG. 3 at specified intervals (e.g. several 10 msec to several 100 msec).

As illustrated in FIG. 3, firstly, at Step S11, the controller 50 reads out a "diagnosis flag" that indicates whether or not a diagnosis condition for diagnosing the presence of the stuck failure of each of the acceleration sensor 38 and the ultrasonic liquid level sensor 71 of the ultrasonic liquid level detector 68 is satisfied from the RAM, and determines whether or not the diagnosis flag is set to "ON". It is noted that the diagnosis flag is set to "OFF" at the starting of the controller 50, and stored in the RAM.

In response to determining that the diagnosis flag is set to "ON" (YES at S11), the controller 50 determines that the diagnosis condition is satisfied, and proceeds to Step S16 that is described later. On the other hand, in response to determining that the diagnosis flag is set to "OFF" (NO at S11), the controller 50 proceeds to Step S12. At Step S12, the controller 50 determines whether or not the diagnosis condition for diagnosing the presence of the stuck failure of each of the acceleration sensor 38 and the ultrasonic liquid level sensor 71 of the ultrasonic liquid level detector 68 is satisfied.

For example, the controller 50 obtains a temperature of the urea water solution 67 in the urea water solution tank 65 from a detection signal input from the urea water solution temperature sensor 75 of the ultrasonic liquid level detector 68, and then, determines whether or not the urea water solution 67 is frozen, that is, whether or not the temperature of urea water solution 67 is higher than -11°C. It is noted that the urea water solution 67 freezes at about -11°C. The controller 50 determines, from a detection signal input from the vehicle speed sensor 39, whether or not the vehicle starts from a stop state. The controller 50 also determines, from the detection signal input from the vehicle speed sensor 39, whether or not the vehicle speed is a specified speed (e.g. 20 km per hour) or less, that is, whether or not the vehicle speed is a speed when the vehicle starts.

In response to determining that the diagnosis condition for diagnosing the presence of the stuck failure of each of the acceleration sensor 38 and the ultrasonic liquid level sensor 71 of the ultrasonic liquid level detector 68 is not satisfied (NO at S12), the controller 50 proceeds to Step S13. For example, in response to determining that the urea water solution 67 in the urea water solution tank 65 is frozen, determining that the vehicle speed is 0, that is, the vehicle is in the stop state, or determining that the vehicle is traveling at the specified speed or more, the controller 50 determines that the diagnosis condition is not satisfied (NO at S12), and proceeds to Step S13.

At Step S13, the controller 50 reads out an integrated acceleration variation value (Σ|Δ acceleration!) described later from the integrated acceleration variation value storage 501 of the EEPROM. The controller 50 sets the integrated acceleration variation value (Σ|Δ acceleration|) to "0" to reset it, and stores the reset integrated acceleration variation value (Σ|Δ acceleration!) in the integrated acceleration variation value storage 501 again. The controller 50 reads out an integrated urea water level variation value (Σ|Δ urea water level|) described later from the integrated urea water level variation value storage 502 of the EEPROM. The controller 50 sets the integrated urea water level variation value (Σ|Δ urea water level|) to "0" to reset it, stores the reset integrated urea water level variation value (Σ|Δ urea water level|) in the integrated urea water level variation value storage 502 again, and then, ends the first sensor failure detection process.

On the other hand, in response to determining that the diagnosis condition for diagnosing the presence of the stuck failure of each of the acceleration sensor 38 and the ultrasonic liquid level sensor 71 of the ultrasonic liquid level detector 68 is satisfied (YES at S12), the controller 50 proceeds to Step S14. For example, in response to determining that the urea water solution 67 in the urea water solution tank 65 is not frozen, and the vehicle starts from a stop state and the vehicle speed is a specified speed (e.g. 10 km per hour) or less, the controller 50 determines that the diagnosis condition is satisfied (YES at S12), and proceeds to Step S14.

At Step S14, the controller 50 reads out the "diagnosis flag" from the RAM, sets the diagnosis flag to "ON", stores the diagnosis flag in the RAM again, and proceeds to Step S15. At Step S15, the controller 50 starts a measurement of an elapsed time TM by a timer, and proceeds to Step S16.

At Step S16, the controller 50 obtains acceleration of the vehicle from a detection signal input from the acceleration sensor 38, and stores the RAM in time series. The controller 50 outputs a transmission signal to each of the ultrasonic liquid level sensor 71 and the ultrasonic concentration sensor 72. Then, the controller 50 calculates a speed of sound from a time that passes until the controller 50 receives, from the ultrasonic concentration sensor 72, a reception signal indicating that the ultrasonic wave W1 (see FIG. 2) is received by the ultrasonic concentration sensor 72 and a round-trip distance between the ultrasonic concentration sensor 72 and the ultrasonic reflection plate 73, and stores the speed of sound in the RAM.

In addition, the controller 50 calculates a liquid level of the urea water solution 67 in the urea water solution tank 65, that is, a urea water level from a time that passes until the controller 50 receives, from the ultrasonic liquid level sensor 71, a reception signal indicating that the ultrasonic wave W2 (see FIG. 2) is received by the ultrasonic liquid level sensor 71 and the speed of sound detected by the ultrasonic concentration sensor 72, and stores the urea water level in the RAM in time series. Then, the controller 50 proceeds to Step S17.

At Step S17, the controller 50 reads out the previous acceleration and the present acceleration of the vehicle from the RAM, and calculates a difference (Δ acceleration) between the previous acceleration and the present acceleration. The controller 50 reads out the integrated acceleration variation value (Σ|Δ acceleration!) from the integrated acceleration variation value storage 501 of the EEPROM, adds an absolute value of the difference (Δ acceleration) to the integrated acceleration variation value (Σ|Δ acceleration!), and stores the resulting integrated acceleration variation value (Σ|Δ acceleration!) in the integrated acceleration variation value storage 501 again.

Subsequently, the controller 50 reads out the previous urea water level and the present urea water level of the urea water solution 67 in the urea water solution tank 65 from the RAM, and calculates a difference (Δ urea water level) between the previous urea water level and the present urea water level. The controller 50 reads out the integrated urea water level variation value (Σ|Δ urea water level|) from the integrated urea water level variation value storage 502 of the EEPROM, adds an absolute value of the difference (Δ urea water level) to the integrated urea water level variation value (Σ|Δ urea water level|), and stores the resulting integrated urea water level variation value (Σ|Δ urea water level|) in the integrated urea water level variation value storage 502 again. Then, the controller 50 proceeds to Step S18.

At Step S18, the controller 50 determines whether or not the elapsed time TM from a time when the diagnosis flag has been set to "ON" at the above-described step S14 is equal to an elapsed time T1 (e.g. about 2 to 3 seconds) stored in the ROM in advance. The elapsed time T1 corresponds to a first specified time in the present disclosure. For example, the controller 50 determines whether or not the elapsed time TM is in a range of the elapsed time T1 stored in the ROM in advance ± 50 msec.

In response to determining that the elapsed time TM is equal to the elapsed time T1 (e.g. about 2 to 3 seconds) stored in the ROM in advance (YES at S18), the controller 50 proceeds to Step S19. At Step S19, the controller 50 reads out the integrated acceleration variation value (Σ|Δ acceleration|) from the integrated acceleration variation value storage 501 of the EEPROM, stores the integrated acceleration variation value (Σ|Δ acceleration|) as a diagnostic integrated acceleration variation value (diagnostic Σ|Δ acceleration|) for diagnosing the presence of the stuck failure of the acceleration sensor 38 in the RAM, and ends the first sensor failure detection process.

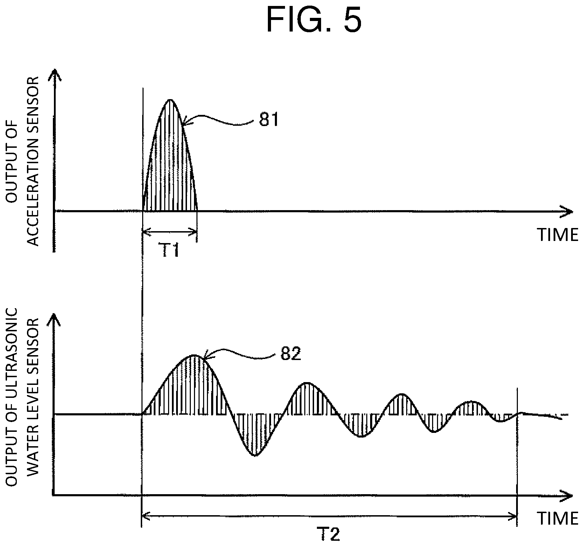

Here, the following will describe an example of an output signal of the acceleration sensor 38 when the vehicle starts from a stop state with reference to FIG. 5. As illustrated in an upper graph of FIG. 5, in a case where the acceleration sensor 38 works in a normal condition, an amplitude of an output signal 81 of the acceleration sensor 38 increases, and then, decreases and becomes substantially "0" by the elapsed time T1 (e.g. about 2 to 3 seconds) from a time when the vehicle starts from a stop state to a time when the vehicle speed reaches a constant speed (e.g. 20 km per hour). Accordingly, the diagnostic integrated acceleration variation value (diagnostic Σ|Δ acceleration|) at the elapsed time T1 is a specified acceleration integration threshold value or more. It is noted that the acceleration integration threshold value is obtained by a performance test in an actual product, and stored in the ROM in advance.

On the other hand, in response to determining that the elapsed time TM is not equal to the elapsed time T1 (e.g. about 2 to 3 seconds) stored in the ROM in advance (NO at S18), the controller 50 proceeds to Step S20. At Step S20, the controller 50 determines whether or not the elapsed time TM from a time when the diagnosis flag has been set to "ON" at the above-described step S14 is equal to an elapsed time T2 (e.g. about 15 to 30 seconds, 20 seconds is preferable) stored in the ROM in advance. The elapsed time T2 corresponds to a second specified time in the present disclosure. For example, the controller 50 determines whether or not the elapsed time TM is in a range of the elapsed time T2 stored in the ROM in advance ± 50 msec.

In response to determining that the elapsed time TM is not equal to the elapsed time T2 (e.g. about 15 to 30 seconds, 20 seconds is preferable) stored in the ROM in advance (NO at S20), the controller 50 ends the first sensor failure detection process.

On the other hand, in response to determining that the elapsed time TM is equal to the elapsed time T2 (e.g. about 15 to 30 seconds, 20 seconds is preferable) stored in the ROM in advance (YES at S20), the controller 50 proceeds to Step S21. At Step S21, the controller 50 reads out the integrated urea water level variation value (Σ|Δ urea water level|) from the integrated urea water level variation value storage 502 of the EEPROM, stores the integrated urea water level variation value (Σ|Δ urea water level|) as a diagnostic integrated urea water level variation value (diagnostic Σ|Δ urea water level|) for diagnosing the presence of the stuck failure of the ultrasonic liquid level sensor 71 in the RAM, and proceeds to Step S22.

Here, the following will describe an example of an output signal of the ultrasonic liquid level sensor 71 of the ultrasonic liquid level detector 68 when the vehicle starts from a stop state with reference to FIG. 5. As illustrated in a lower graph of FIG. 5, when the ultrasonic liquid level sensor 71 works in a normal condition, an amplitude of an output signal 82 of the ultrasonic liquid level sensor 71 gradually decreases while the output signal alternately becomes a positive value and a negative value at a plurality of times in accordance with the variations in the liquid level, and approaches substantially "0" by the elapsed time T2 (e.g. about 15 to 30 seconds, 20 seconds is preferable) from a time when the vehicle starts from a stop state to a time when a variation of a liquid level of the urea water solution 67 in the urea water solution tank 65 becomes substantially constant. Accordingly, the diagnostic integrated urea water level variation value (diagnostic Σ|Δ urea water level|) at the elapsed time T2 is a specified urea water level integration threshold value or more. The specified urea water level integration threshold value corresponds to the liquid level integration threshold value in the present disclosure. It is noted that the urea water level integration threshold value is obtained by a performance test in the actual product, and stored in the ROM in advance.

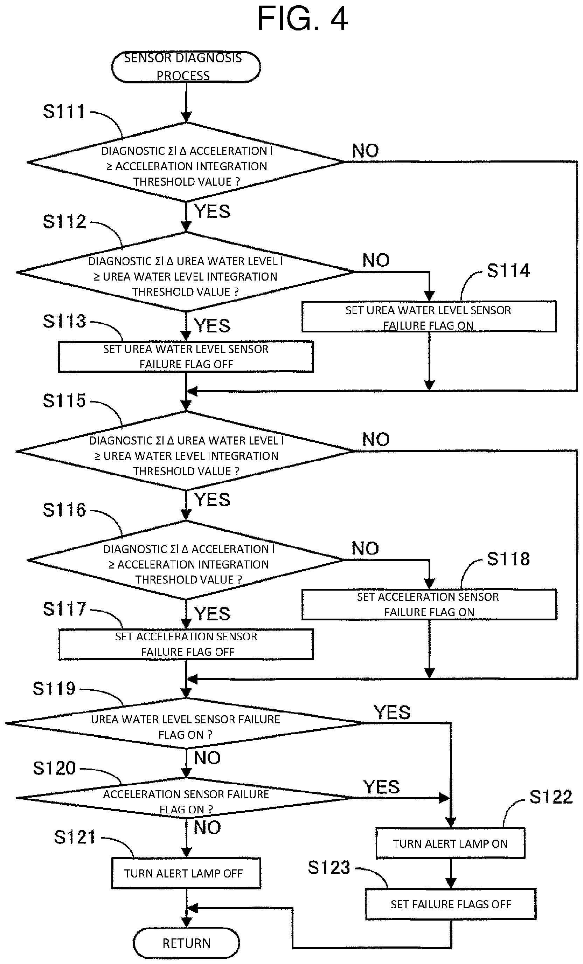

At Step S22, the controller 50 reads out the "diagnosis flag" from the RAM, sets the diagnosis flag to "OFF", stores the diagnosis flag in the RAM again, and proceeds to Step S23. At Step S23, the controller 50 sets the elapsed time TM that is measured by the timer to "0" to reset it, and proceeds to Step S24. At Step S24, the controller 50 executes a sub process (see FIG. 4) named a "sensor diagnosis process" described later in which the presence of the stuck failure of each of the acceleration sensor 38 and the ultrasonic liquid level sensor 71 of the ultrasonic liquid level detector 68 is determined, and ends the first sensor failure detection process.

The following will describe the sub process named the "sensor diagnosis process" with reference to FIG. 4. As illustrated in FIG. 4, firstly, at Step S111, the controller 50 reads out the diagnostic integrated acceleration variation value (diagnostic Σ|Δ acceleration|) from the RAM, and determines whether or not the diagnostic integrated acceleration variation value (diagnostic Σ|Δ acceleration|) is the acceleration integration threshold value or more. In response to determining that the diagnostic integrated acceleration variation value (diagnostic Σ|Δ acceleration|) is less than the acceleration integration threshold value (NO at S111), the controller 50 proceeds to Step S115 described later.

On the other hand, in response to determining that the diagnostic integrated acceleration variation value (diagnostic Σ|Δ acceleration|) is the acceleration integration threshold value or more (YES at S111), the controller 50 determines that the output of the acceleration sensor 38 is not stuck, and proceeds to Step S112. At Step S112, the controller 50 reads out the diagnostic integrated urea water level variation value (diagnostic Σ|Δ urea water level|) from the RAM, and determines whether or not the diagnostic integrated urea water level variation value (diagnostic Σ|Δ urea water level|) is the urea water level integration threshold value or more.

In response to determining that the diagnostic integrated urea water level variation value (diagnostic Σ|Δ urea water level|) is the urea water level integration threshold value or more (YES at S112), the controller 50 determines that the output of the ultrasonic liquid level sensor 71 of the ultrasonic liquid level detector 68 is not stuck, and proceeds to Step S113. At Step S113, the controller 50 reads out a urea water level sensor failure flag from the RAM, sets the urea water level sensor failure flag to "OFF", stores the urea water level sensor failure flag in the RAM again, and proceeds to Step S115. It is noted that the urea water level sensor failure flag is set to "OFF" at the starting of the controller 50, and stored in the RAM.

On the other hand, in response to determining that the diagnostic integrated urea water level variation value (diagnostic Σ|Δ urea water level|) is less than the urea water level integration threshold value (NO at S112), the controller 50 determines that the output of the ultrasonic liquid level sensor 71 of the ultrasonic liquid level detector 68 is stuck, that is, invariable, and proceeds to Step S114. At Step S114, the controller 50 reads out the urea water level sensor failure flag from the RAM, sets the urea water level sensor failure flag to "ON", stores the urea water level failure flag in the RAM again, and proceeds to Step S115.

At Step S115, the controller 50 reads out the diagnostic integrated urea water level variation value (diagnostic Σ|Δ urea water level|) from the RAM, and determines whether or not the diagnostic integrated urea water level variation value (diagnostic Σ|Δ urea water level|) is the urea water level integration threshold value or more. In response to determining that the diagnostic integrated urea water level variation value (diagnostic Σ|Δ urea water level|) is the urea water level integration threshold value or more (YES at S115), the controller 50 determines that the output of the ultrasonic liquid level sensor 71 of the ultrasonic liquid level detector 68 is not stuck, and proceeds to Step S116.

At Step S116, the controller 50 reads out the diagnostic integrated acceleration variation value (diagnostic Σ|Δ acceleration|) from the RAM, and determines whether or not the diagnostic integrated acceleration variation value (diagnostic Σ|Δ acceleration|) is the acceleration integration threshold value or more. In response to determining that the diagnostic integrated acceleration variation value (diagnostic Σ|Δ acceleration|) is the acceleration integration threshold value or more (YES at S116), the controller 50 determines that the output of the acceleration sensor 38 is not stuck, and proceeds to Step S117. At Step S117, the controller 50 reads out an acceleration sensor failure flag from the RAM, sets the acceleration sensor failure flag to "OFF", stores the acceleration sensor failure flag in the RAM again, and proceeds to Step S119. It is noted that the acceleration sensor failure flag is set to "OFF" at the starting of the controller 50, and stored in the RAM.

On the other hand, in response to determining that the diagnostic integrated acceleration variation value (diagnostic Σ|Δ acceleration|) is less than the acceleration integration threshold value (NO at S116), the controller 50 determines that the output of the acceleration sensor 38 is stuck, that is, invariable, and proceeds to Step S118. At Step S118, the controller 50 reads out the acceleration sensor failure flag from the RAM, sets the acceleration sensor failure flag to "ON", stores the acceleration sensor failure flag in the RAM again, and proceeds to Step S119.

At Step S119, the controller 50 reads out the urea water level sensor failure flag from the RAM, and determines whether or not the urea water level sensor failure flag is set to "ON". In response to determining that the urea water level sensor failure flag is set to "ON" (YES at S119), the controller 50 proceeds to Step S122 described later. On the other hand, in response to determining that the urea water level sensor failure flag is set to "OFF" (NO at S119), the controller 50 proceeds to Step S120.

At Step S120, the controller 50 reads out the acceleration sensor failure flag from the RAM, and determines whether or not the acceleration sensor failure flag is set to "ON". In response to determining that the acceleration sensor failure flag is set to "OFF" (NO at S120), the controller 50 proceeds to Step S121. At Step S121, the controller 50 turns the alert lamp 15 off, and ends the sub process. Then, the controller 50 returns to the main flowchart, and ends the first sensor failure detection process. With this process, when the output of each of the acceleration sensor 38 and the ultrasonic liquid level sensor 71 is not stuck, the alert lamp 15 is turned off.

On the other hand, in response to determining that the acceleration sensor failure flag is set to "ON" (YES at S120), the controller 50 proceeds to Step S122. At Step S122, the controller 50 turns the alert lamp 15 on, and proceeds to Step S123. This alerts users that the output of the acceleration sensor 38 or the output of the ultrasonic liquid level sensor 71 of the ultrasonic liquid level detector 68 is stuck, that is, invariable.

At Step S123, the controller 50 reads out the urea water level sensor failure flag and the acceleration sensor failure flag from the RAM, sets both the flags to "OFF", and stores both the flags in the RAM again. Then, the controller 50 ends the sub process, returns to the main flowchart, and ends the first sensor failure detection process.

Here, the controller 50 serves as a failure detection unit and a speed variation determination unit. The ultrasonic liquid level sensor 71 of the ultrasonic liquid level detector 68 serves as a liquid level sensor.

As described above in detail, in the internal combustion engine 10 according to the present embodiment, the controller 50 surely detects whether or not either of the output of the acceleration sensor 38 or the output of the ultrasonic liquid level sensor 71 is stuck, that is, invariable when the vehicle starts from a stop state. In response to the output of acceleration sensor 38 or the ultrasonic liquid level sensor 71 that is stuck, the controller 50 turns the alert lamp 15 on to alert the users. Thus, the users of the vehicle surely recognizes that either of the output of the acceleration sensor 38 or the output of the ultrasonic liquid level sensor 71 is stuck.

In the present embodiment, the controller 50 detects the presence of the failure of each of the acceleration sensor 38 and the ultrasonic liquid level sensor 71 based on acceleration variations of the vehicle detected by the acceleration sensor 38 for the elapsed time T1 and variations in a liquid level of the urea water solution 67 detected by the ultrasonic liquid level sensor 71 for the elapsed time T2. Thus, the presence of the failure of each of the acceleration sensor 38 and the ultrasonic liquid level sensor 71 is detected based on detection signals input from the acceleration sensor 38 and the ultrasonic liquid level sensor 71.

In the present embodiment, in response to an output variation of the acceleration sensor 38 that is the specified acceleration integration threshold value or more and an output variation of the ultrasonic liquid level sensor 71 that is less than the specified urea water level integration threshold value, the controller 50 determines that the ultrasonic liquid level sensor 71 is in the failure condition. In addition, in response to an output variation of the ultrasonic liquid level sensor 71 that is the specified urea water level integration threshold value or more and an output variation of the acceleration sensor 38 that is less than the specified acceleration integration threshold value, the controller 50 determines that the acceleration sensor 38 is in the failure condition. Thus, the presence of the failure of each of the acceleration sensor 38 and the ultrasonic liquid level sensor 71 is detected.

In the present embodiment, in response to an integrated value of absolute values of acceleration variations of the vehicle detected for the elapsed time T1 that is the specified acceleration integration threshold value or more and an integrated value of absolute values of variations in the liquid level of the urea water solution 67 detected for the elapsed time T2 that is the specified urea water level integration threshold value or more, the controller 50 determines that the ultrasonic liquid level sensor 71 is in a normal condition. On the other hand, in response to an integrated value of absolute values of acceleration variations of the vehicle detected for the elapsed time T1 that is a specified acceleration integration threshold value or more, and an integrated value of absolute values of variations in the liquid level of the urea water solution 67 detected for the elapsed time T2 that is less than the urea water level integration threshold value, the controller 50 determines that the ultrasonic liquid level sensor 71 is in the failure condition. Accordingly, the presence of the failure of the ultrasonic liquid level sensor 71 is detected based on the acceleration variations detected by the acceleration sensor 38 and the variations in the liquid level detected by the ultrasonic liquid level sensor 71.

In the present embodiment, the controller 50 performs control, when the vehicle starts from a stop state, for causing the acceleration sensor 38 to detect acceleration variations of the vehicle for the elapsed time T1 and the ultrasonic liquid level sensor 71 to detect variations in the liquid level of the urea water solution 67. When the vehicle starts form the stop state, an integrated value of absolute values of the acceleration variations of the vehicle detected for the elapsed time T1 is the specified acceleration integration threshold value or more. As a result, at the starting of the vehicle, the presence of the failure of the ultrasonic liquid level sensor 71 is surely detected by determining whether or not an integrated value of absolute values of the variations in the liquid level of the urea water solution 67 detected for the elapsed time T2 is the specified urea water level integration threshold value or more.

In the present embodiment, the elapsed time T2 is a time until a liquid level of the urea water solution 67 becomes stable. Accordingly, variations in the liquid level of the urea water solution 67 are surely detected by the ultrasonic liquid level sensor 71, so that the presence of the failure of the ultrasonic liquid level sensor 71 is surely detected.

In the present embodiment, the elapsed time T1 is shorter than the elapsed time T2. Accordingly, even when behavior variations of the vehicle is large, the presence of the failure of the ultrasonic liquid level sensor 71 is surely detected.

In the present embodiment, a liquid level of the urea water solution 67 stored in the urea water solution tank 65 is detected with high accuracy by the ultrasonic liquid level sensor 71 disposed in the urea water solution tank 65. As a result, detection accuracy of the ultrasonic liquid level sensor 71 for the presence of the failure is improved.

It is noted that the numerical values used in the description of the above-described embodiment are presented as one example, and the present disclosure is not limited to these numerical values. In addition, inequality signs such as greater than or equal to (≥), less than or equal to (≤), greater than (>), and less than (<) may include an equality sign.

The failure detector of the present disclosure is not limited to the configuration, the structure, the external appearance, the process, etc. that are described in the above-described embodiment, and may be modified, improved, added, or eliminated within the gist of the present disclosure. It is noted that in the following description, the same reference numerals as the internal combustion engine 10, etc. according to the above-described embodiment of FIGS. 1 to 5 indicate identical or substantially identical components to the internal combustion engine 10, etc. according to the above-described embodiment.

### [Another first embodiment]

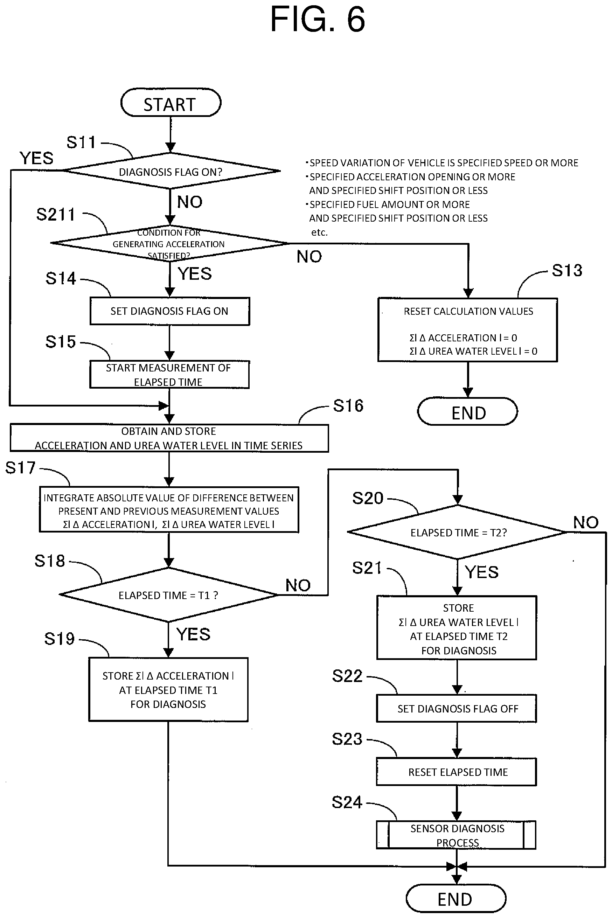

(A) For example, the controller 50 may perform a second sensor failure detection process illustrated in FIG. 6, instead of the first sensor failure detection process illustrated in FIG. 3. As illustrated in FIG. 6, the second sensor failure detection process is substantially the same as the first sensor failure detection process. However, the second sensor failure detection process is different from the first sensor failure detection process in that the controller 50 performs a process at Step S211 instead of the process of the above-described step S12.

Specifically, as illustrated in FIG. 6, at the above-described step S11, in response to determining that the diagnosis flag is set to "OFF" (NO at S11), the controller 50 proceeds to Step S211. At Step S211, the controller 50 determines whether or not a condition for generating the acceleration for diagnosing the presence of the stuck failure of each of the acceleration sensor 38 and the ultrasonic liquid level sensor 71 of the ultrasonic liquid level detector 68 is satisfied during traveling of a vehicle.

For example, the controller 50, from a detection signal input from the vehicle speed sensor 39, determines whether or not the vehicle speed is changed by a specified speed or more (e.g. 30 km per hour or more) for a specified time (e.g. about 2 to 3 seconds). In response to determining that the vehicle speed is not changed by the specified speed or more (NO at S211) for the specified time, the controller 50 may proceed to Step S13. On the other hand, in response to determining that the vehicle speed is changed by the specified speed or more (YES at S211) for the specified time, the controller 50 may proceed to Step S14. With this process, the controller 50 may diagnose the presence of the stuck failure of each of the acceleration sensor 38 and the ultrasonic liquid level sensor 71 of the ultrasonic liquid level detector 68 during the traveling of the vehicle.

In the present embodiment, the controller 50 as the speed variation determination unit determines whether or not a speed variation detected by the vehicle speed sensor 39 is a specified speed threshold value or more. When the speed variation of the vehicle is the specified speed threshold value or more, an integrated value of absolute values of acceleration variations of the vehicle detected for the elapsed time T1 is the specified acceleration integration threshold value or more. As a result, the presence of the failure of the ultrasonic liquid level sensor 71 is surely detected by determining whether or not an integrated value of absolute values of variations in the liquid level of the urea water solution 67 detected for the elapsed time T2 is the specified urea water level integration threshold value or more, when the speed variation of the vehicle is the specified speed threshold value or more during the traveling of the vehicle.

For example, in response to, at Step S211, an accelerator opening detected by the accelerator opening detector 33 that is a specified opening or more and a shift position detected by a shift position detector (not shown) that is a specified shift position or less, the controller 50 may determine that the vehicle speed has been changed by the specified speed or more. With this process, the controller 50 may diagnose the presence of the stuck failure of each of the acceleration sensor 38 and the ultrasonic liquid level sensor 71 of the ultrasonic liquid level detector 68 during the traveling of the vehicle.

In addition, for example, at Step S211, in response to a fuel injection amount injected into cylinders of the internal combustion engine 10 from the injectors 14A to 14D that is a specified amount or more and a shift position detected by a shift position detector (not shown) that is a specified shift position or less, the controller 50 may determine that the vehicle speed has been changed by the specified speed or more. With this process, the controller 50 may diagnose the presence of the stuck failure of each of the acceleration sensor 38 and the ultrasonic liquid level sensor 71 of the ultrasonic liquid level detector 68 during the traveling of the vehicle.

### [Second embodiment]

(B) For example, the elapsed time T1 measured in the above step S18 may be set substantially the same time as the elapsed time T2 measured in the above step S20. This setting may improve accuracy of diagnostic integrated acceleration variation value (diagnostic Σ|Δ acceleration|), so that the controller 50 may detect the presence of the stuck failure of the ultrasonic liquid level sensor 71 even if each acceleration variation (Δ acceleration) of the vehicle is small. Therefore, the presence of the stuck failure of the ultrasonic liquid level sensor 71 is surely detected.

### [Third embodiment]

(C) For example, in the above-described embodiments, the urea water solution 67 is stored in the urea water solution tank 65. However, ammonia as the redundant agent may be stored in the urea water solution tank 65.

### [Forth embodiment]

(D) For example, a three-dimensional acceleration sensor and a three-dimensional angular velocity sensor may be used as the acceleration sensor 38. The urea water level detected by the ultrasonic liquid level sensor 71 may be corrected by an inclination of a liquid surface of the urea water solution 67 in the urea water solution tank 65 from a horizontal surface detected by the three-dimensional acceleration sensor and the three-dimensional angular velocity sensor. With this correction, measurement accuracy of the liquid level of urea water solution in the urea water solution tank 65 and estimation accuracy of the remaining of the urea water solution may be improved.

### [Fifth embodiment]

(E) For example, instead of the ultrasonic liquid level detector 68, a laser liquid level sensor may be disposed on a ceiling portion of the urea water solution tank 65. The controller 50 may calculate a urea water level by detecting a liquid level of the urea water solution 67 stored in the urea water solution tank 65 by the laser liquid level sensor.

With this configuration, the liquid level of the urea water solution 67 stored in the urea water solution tank 65 is detected with high accuracy by the laser liquid level sensor disposed on the ceiling of the urea water solution tank 65. As a result, detection accuracy of the laser liquid level sensor for the presence of the failure is improved.

A failure detector includes a reducing agent tank (65) in which reducing agent solution (67) is stored, a liquid level sensor configured to detect a liquid level of the reducing agent solution (67), a behavior variation detector configured to detect behavior variations of a vehicle, and a controller (50) configured to perform control for causing the behavior variation detector to detect the behavior variations of the vehicle for a first specified time and the liquid level sensor to detect variations in the liquid level of the reducing agent solution (67) for a second specified time. The controller (50) has a failure detection unit that detects a presence of a failure of each of the behavior variation detector and the liquid level sensor based on the behavior variations and the variations in the liquid level of the reducing agent solution (67).

## Claims

1. A failure detector, comprising:
a reducing agent tank (65) in which reducing agent solution (67) of specified concentration is stored;
a liquid level sensor configured to detect a liquid level of the reducing agent solution (67) stored in the reducing agent tank (65);
a behavior variation detector configured to detect behavior variations of a vehicle; and
a controller (50) configured to perform control for causing the behavior variation detector to detect the behavior variations of the vehicle for a first specified time and the liquid level sensor to detect variations in the liquid level of the reducing agent solution (67) for a second specified time, **characterized in that**
the controller (50) has a failure detection unit that detects a presence of a failure of each of the behavior variation detector and the liquid level sensor based on the behavior variations of the vehicle detected by the behavior variation detector and the variations in the liquid level of the reducing agent solution (67) detected by the liquid level sensor.

2. The failure detector according to claim 1, **characterized in that**
the behavior variation detector includes an acceleration sensor (38) mounted on the vehicle,
the failure detection unit determines that the liquid level sensor is in a failure condition in response to an output variation of the acceleration sensor (38) that is a specified acceleration integration threshold value or more and an output variation of the liquid level sensor that is less than a specified liquid level integration threshold value, and
the failure detection unit determines that the acceleration sensor (38) is in a failure condition in response to an output variation of the liquid level sensor that is the specified liquid level integration threshold value or more and an output variation of the acceleration sensor (38) that is less than the specified acceleration integration threshold value.

3. The failure detector according to claim 2, **characterized in that**
the controller (50) performs control for causing the acceleration sensor (38) to detect acceleration variations of the vehicle for the first specified time and the liquid level sensor to detect the variations in the liquid level of the reducing agent solution (67) for the second specified time,
the failure detection unit determines that the liquid level sensor is in a normal condition in response to an integrated value of absolute values of the acceleration variations of the vehicle that is the specified acceleration integration threshold value or more and an integrated value of absolute values of the variations in the liquid level that is the specified liquid level integration threshold value or more, and
the failure detection unit determines that the liquid level sensor is in the failure condition in response to an integrated value of absolute values of the acceleration variations of the vehicle that is the specified acceleration integration threshold value or more, and an integrated value of absolute values of the variations in the liquid level that is less than the specified liquid level integration threshold value.

4. The failure detector according to claim 3, **characterized in that**
the controller (50) performs the control, when the vehicle starts from a stop state, for causing the acceleration sensor (38) to detect the acceleration variations of the vehicle for the first specified time and the liquid level sensor to detect the variations in the liquid level of the reducing agent solution (67) for the second specified time.

5. The failure detector according to claim 3, **characterized in that**
the behavior variation detector further includes a vehicle speed sensor (39) mounted on the vehicle,
the controller (50) has a speed variation determination unit determining whether or not a speed variation detected by the vehicle speed sensor (39) is a specified speed threshold value or more, and
in response to determining that the speed variation detected by the vehicle speed sensor (39) is the specified speed threshold value or more, the controller (50) performs the control for causing the acceleration sensor (38) to detect the acceleration variations of the vehicle for the first specified time and the liquid level sensor to detect the variations in the liquid level of the reducing agent solution (67) for the second specified time.

6. The failure detector according to any one of claims 1 to 5, **characterized in that**
the second specified time is a time until the liquid level of the urea water solution (67) becomes stable.

7. The failure detector according to claim 6, **characterized in that**
the first specified time is shorter than the second specified time.

8. The failure detector according to claim 6, **characterized in that**
the first specified time is the same time as the second specified time.

9. The failure detector according to any one of claims 1 to 8, **characterized in that**
the liquid level sensor includes an ultrasonic liquid level sensor (71) disposed in the reducing agent tank (65) or a laser liquid level sensor disposed on a ceiling portion of the reducing agent tank (65).

10. A failure detection method performed by a failure detector that includes a reducing agent tank (65) in which reducing agent solution (67) of specified concentration is stored, a liquid level sensor configured to detect a liquid level of the reducing agent solution (67) stored in the reducing agent tank (65), a behavior variation detector configured to detect behavior variations of a vehicle, and a controller (50), the failure detection method comprising:
detecting the behavior variations of the vehicle for a first specified time by the behavior variation detector,
detecting variations in the liquid level of the reducing agent solution (67) for a second specified time by the liquid level sensor, and
detecting a presence of a failure of each of the behavior variation detector and the liquid level sensor based on the detected behavior variations of the vehicle and the detected variations in the liquid level of the reducing agent solution (67), wherein
the detecting of the behavior variations, the variations in the liquid level of the reducing agent solution (67), and the presence of the failure is performed by the controller (50).
